# FASCICULE DE BREVET EUROPEEN

(11) **EP 0 706 490 B1**
(45) Date de publication et mention de la délivrance du brevet: **10.12.1997**
(21) Numéro de dépôt: 95915732.2
(22) Date de dépôt: 02.05.1995
(51) Int. Cl.: B65G 17/48, B65G 47/51

(54) **INSTALLATION DE STOCKAGE PENDULAIRE**
HÄNGSPEICHER
SUSPENDED STORAGE APPARATUS

(30) Priorité: 03.05.1994 FR 9405776
(43) Date de publication de la demande: 17.04.1996
(73) Titulaire: SAPAL, Société Anonyme des Plieuses Automatiques, 1400 Ecublens (CH)
(72) Inventeur: MÜLLER, Urs, CH-7233 Jenaz (CH); WALSER, Hans, Heiri, CH-7214 Grüsch (CH)
(74) Mandataire: Nithardt, Roland
(86) Numéro de dépôt international: CH9500096
(87) Numéro de publication internationale: WO9529859

(56) Documents cités:
- EP-A- 0 538 742
- DE-A- 2 352 424
- DE-B- 1 227 831
- FR-A- 2 113 573
- GB-A- 2 079 235
- US-A- 3 168 874

## Description

La présente invention concerne une installation de stockage pendulaire de produits, notamment de produits alimentaires et plus particulièrement de plaques de chocolat ou similaires, ces produits étant déposés sur des tablettes disposées horizontalement sur des gondoles pendues horizontalement à deux chaînes montées sur un bâti et cheminant parallèlement entre elles sur un circuit fermé comprenant une section d'alimentation allant d'une station de dépôt des produits sur les tablettes, à une station réceptrice de ces produits agencée pour décharger les tablettes, et une section de retour dans laquelle les tablettes sont ramenées vides de la station réceptrice à la station de dépôt.

Le préambule de la revendication 1 est basé sur l'état de la technique tel que décrit dans la demande de brevet européen publiée sous le numéro 0 538 742 A1. Dans les lignes de production de produits alimentaires, par exemple les plaques de chocolat, les biscuits, les produits enrobés de chocolat et autres produits fragiles et délicats à manipuler, il est souvent nécessaire de pouvoir disposer d'une installation de stockage momentané de ces produits étant donné que la production est effectuée en continu alors que le conditionnement se fait en discontinu et que les unités de conditionnement d'une même ligne sont soumises périodiquement à des temps d'arrêt requis pour l'entretien, la réparation ou la mise en place du matériau d'emballage.

Ces installations de stockage doivent répondre à un cahier des charges relativement lourd. Elles doivent permettre un stockage de grande capacité et assurer un transport efficace et soigné des produits d'une station de dépôt vers une station réceptrice, en offrant un maximum de sécurité aux produits véhiculés, une grande souplesse d'utilisation et un potentiel de stockage variable en fonction de la demande instantanée.

L'un des problèmes que posent ces installations est celui de l' encombrement. Il est aisé de comprendre que l'utilisateur souhaite disposer d'une capacité de stockage la plus grande possible pour un encombrement minimal. Ce problème d'encombrement est en partie lié au problème du pivotement des gondoles, notamment dans les installations dans lesquelles l'avance s'effectue pas à pas. Dans les zones de déplacement rectiligne les gondoles ne subissent habituellement qu'une accélération et une décélération verticales qui ne risquent pas de provoquer un endommagement des produits. En revanche, dans les zones de déplacement curviligne, les gondoles sont soumises à un mouvement pendulaire et risquent d'entrer en collision si l'écartement entre deux colonnes voisines le long desquelles cheminent ces gondoles n'est pas supérieur à un seuil déterminé. Une telle collision risque de provoquer un déplacement désordonné des produits dans les gondoles, voire de les endommager ou de les éjecter. Pour éviter ce risque, les colonnes doivent être suffisamment écartées les unes des autres ce qui a pour conséquence une augmentation non négligeable de l'encombrement de l'installation, notamment lorsque celle-ci comporte un nombre élevé de colonnes.

Le brevet américain No. 3 168 874 décrit un dispositif mécanique amortisseur des oscillations d'une plate-forme suspendue d'une installation de convoyage. On notera que ce dispositif comporte des disques de friction mécanique, ce qui rend son réglage difficile et ne permet pas de garantir un retour systématique de la plate-forme à la position verticale. Or pour les gondoles, il est à la fois nécessaire que l'amortissement des oscillations ait lieu très rapidement et qu'à la fin de cet amortissement elles retrouvent leur position zéro, c'est-à-dire verticale sans inclinaison résiduelle due à une friction résiduelle induisant une force supérieure à la force de gravité tendant à les ramener à la verticale.

La présente invention se propose de résoudre les problèmes mentionnés ci-dessus en remédiant aux inconvénients des systèmes antérieurs connus et en réalisant une installation compacte, ayant un encombrement minimal tout en palliant le risque de collision entre les gondoles.

Ces buts sont atteints par une installation de stockage qui est caractérisée en ce que chaque gondole est associée à au moins un dispositif amortisseur agencé pour limiter l'amplitude de son mouvement oscillant et pour amortir rapidement ce mouvement, ce dispositif amortisseur comportent au moins un disque de freinage et des moyens pour coopérer avec au moins une surface de ce disque pour exercer une friction sur cette surface, le disque et lesdits moyens étant respectivement solidaires d'une des chaînes et de la gondole et ayant un mouvement relatif lorsque la gondole est soumise à des oscillations, le disque de freinage est étant logé à l'intérieur d'une cavité ménagée à l'intérieur d'un boîtier et contenant un liquide visqueux.

De façon avantageuse, ledit liquide visqueux est une huile ayant un coefficient de viscosité élevé.

De préférence, ladite cavité a une forme cylindrique et la hauteur de sa paroi latérale est légèrement supérieure à l'épaisseur du disque de freinage de telle manière que l'espace séparant les surfaces planes de ce disque des parois intérieures adjacentes de la cavité est faible, mais suffisante pour contenir un volume prédéterminé de liquide visqueux.

Ce disque de freinage peut être solidaire d'une douille montée sur un pivot qui constitue l'axe d'un maillon d'une chaîne, cette douille étant rendue solidaire dudit maillon.

De préférence, ladite douille comporte des crans périphériques disposés parallèlement à son axe et le disque de freinage est chassé sur lesdits crans.

De façon avantageuse, ladite cavité est ménagée à l'intérieur d'un boîtier solidaire d'un support latéral d'une gondole, ce boîtier étant constitué principalement d'une pièce circulaire et d'un capot fixé contre ladite pièce circulaire, ledit capot peut comporter un rebord annulaire qui s'adapte de manière étanche autour de ladite pièce circulaire ou un logement annulaire agencé pour contenir un joint d' étanchéité en contact avec ladite douille.

Dans une forme de réalisation avantageuse, le dispositif amortisseur comporte plusieurs disques de freinage logés à l'intérieur de la cavité contenant un liquide visqueux

De préférence, ces disques de freinage se divisent en un premier groupe de disques de freinage solidaires de la douille et en un second groupe de disques de freinage solidaires du boîtier, chaque disque du second groupe étant interposé entre deux disques du premier groupe.

Dans cette forme de réalisation, les disques de freinage du second groupe sont chassés à l'intérieur du capot sur des crans qui garnissent une surface intérieure définissant la paroi latérale de la cavité de forme cylindrique.

La présente invention sera mieux comprise en référence à la description d'une forme de réalisation préférée et au dessin annexé donné à titre d'exemple non limitatif, dans lequel :
la figure 1 représente une vue en perspective illustrant une forme de réalisation préférée de l'installation de stockage selon l'invention,
la figure 2 représente une vue en perspective d'une gondole portant des tablettes destinées à recevoir des produits,
la figure 3 représente une vue en coupe axiale de la gondole de la figure 2, suspendue aux deux chaînes de l'installation,
la figure 4 représente une vue en coupe d'un dispositif amortisseur équipant la gondole des figures 2 et 3, et
la figure 5 représente une vue similaire à celle de la figure 3, mais illustrant une variante de réalisation du dispositif amortisseur.

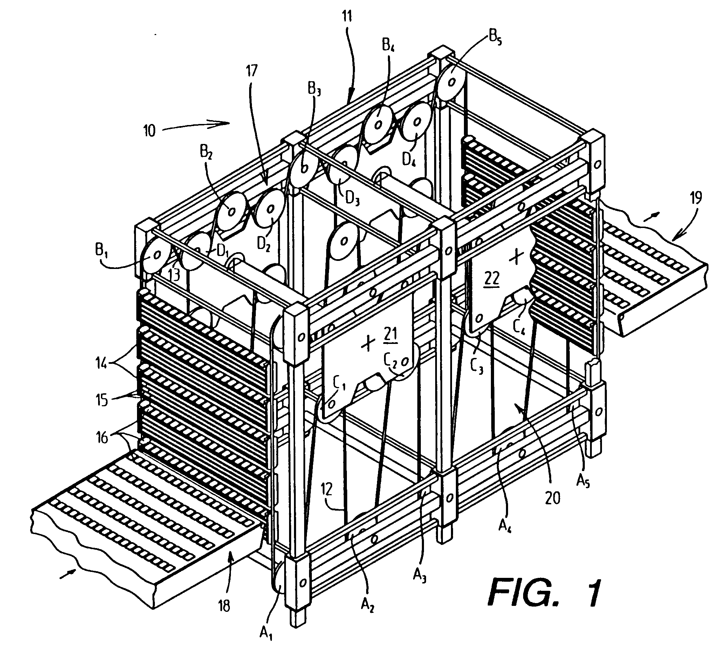

En référence à la figure 1, l'installation de stockage pendulaire 10, représentée en perspective, se compose principalement d'un bâti 11 qui, dans ce cas, a la forme d'un parallélépipède rectangle qui définit un espace de stockage à l'intérieur duquel sont montées deux chaînes de transport sans fin 12 et 13 entre lesquelles sont suspendues des gondoles 14 portant des tablettes 15 sur lesquelles sont déposés les produits 16. Les gondoles 14 sont suspendues horizontalement par deux pivots latéraux aux chaînes 12 et 13 qui se déplacent parallèlement entre elles selon un trajet à boucles multiples comportant une première section dite section d'alimentation 17 allant d'une station de dépôt 18 des produits sur les tablettes à une station réceptrice 19, agencée pour décharger lesdits tablettes, et une seconde section 20 dite section de retour dans laquelle les tablettes préalablement déchargés retournent de la station réceptrice à la station de dépôt. Dans l'exemple représenté, l'installation comporte cinq paires de roues dentées inférieures respectivement A1, A2, A3, A4, A5 et cinq paires de roues dentées supérieures respectivement B1, B2, B3, B4, B5 qui sont montées sur des axes fixes portés par le bâti. Par ailleurs, l'installation comporte, dans l'exemple représenté, deux chariots mobiles en hauteur respectivement 21 et 22 qui portent chacun deux paires de roues dentées inférieures C1, C2 (pour le chariot 21) et C3, C4 (pour le chariot 22) et deux paires de roues supérieures D1, D2 (pour le chariot 21) et D3, D4 (pour le chariot 22). La section d'alimentation du circuit fermé défini par les deux chaînes 12 et 13 se compose des segments de chaîne passant de la station de dépôt à la verticale des roues B1, puis par-dessus ces roues, en dessous des roues supérieures D1 du chariot 21, au-dessus des roues B2, en dessous des roues supérieures D2 du chariot 21, puis au-dessus des roues B3, en dessous des roues supérieures D3 du chariot 22, au-dessus des roues B4, en dessous des roues supérieures D4 du chariot 22, et au-dessus des roues B5 pour redescendre à la verticale jusqu'à la station réceptrice. La section de retour est définie par les tronçons de chaînes allant de la station de retour en dessous des roues A5 puis au-dessus des roues inférieures C4 du chariot 22, en dessous des roues A4, au-dessus des roues inférieures C3 du chariot 22, en dessous des roues A3, au-dessus des roues inférieures C2 du chariot 21, en dessous des roues A2, au-dessus des roues inférieures C1 du chariot 21, et enfin en dessous des roues A1 pour revenir à la verticale de la station de dépôt. Grâce aux chariots mobiles, l'installation de stockage a une capacité d' accumulation ou de stockage variable. Lorsque les chariots sont en position haute, la section d'alimentation est minimale, c'est-à-dire que les produits sont acheminés le plus rapidement possible de la station de dépôt à la station réceptrice. En revanche, lorsque les chariots descendent vers une position basse, la longueur de la section d'alimentation augmente de même que la capacité de stockage de l'installation.

Les produits 16 sont disposés sur les tablettes 15 qui sont superposées parallèlement dans les gondoles 14.

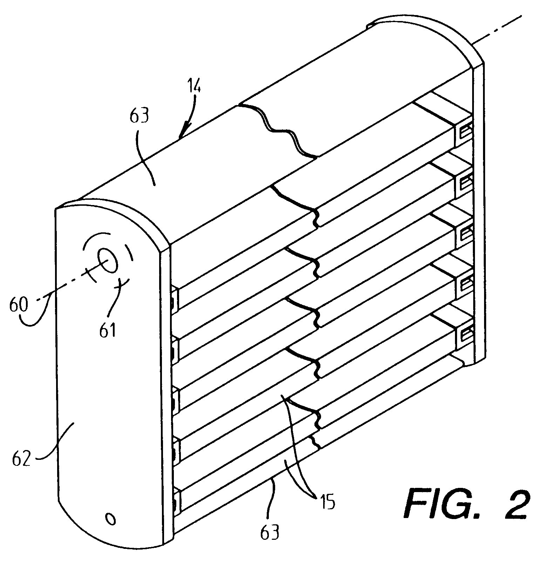

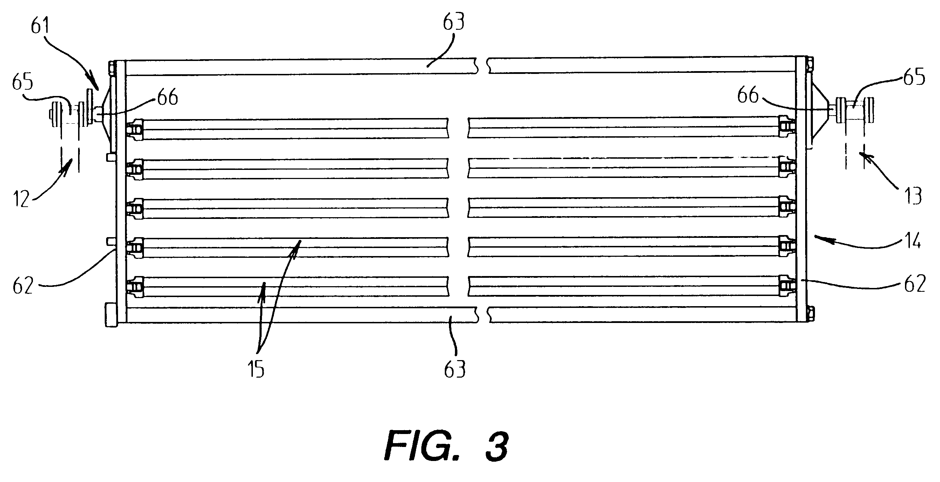

La figure 2 représente une vue en perspective et la figure 3 une vue en coupe axiale illustrant une gondole 14 portant un ensemble de tablettes 15 destinés à transporter lesdits produits 16 de la station de dépôt 18 à la station réceptrice 19. Dans les installations connues, des gondoles ayant des fonctions similaires sont suspendues à des chaînes latérales et peuvent pivoter librement autour d'un axe 60. Comme cela a été mentionné précédemment, l'encombrement longitudinal de l'installation est, dans une certaine mesure, fonction de la l'espace libre qui doit être obligatoirement préservé entre les colonnes de gondoles pour éviter que celles-ci ne s'entrechoquent dans les zones où elles sont soumises à des mouvements pendulaires, notamment dans les zones curvilignes du circuit. Comme il n'est pas possible d'empêcher le balancement des gondoles, surtout dans une installation où le cheminement s'effectue dans un mouvement pas à pas, il est nécessaire de trouver un moyen qui permet de limiter l' amplitude du balancement et par conséquent, le risque de collision des gondoles.

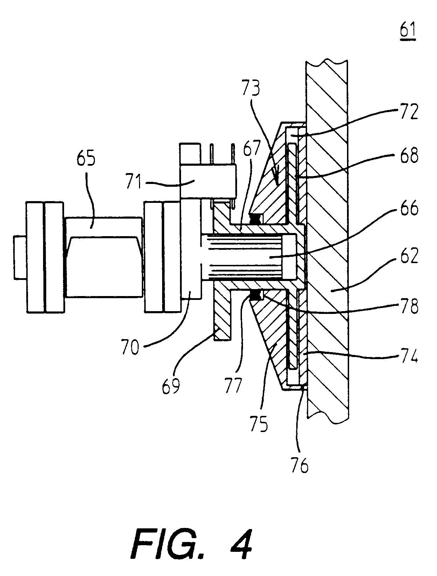

Dans la réalisation décrite, chaque gondole est équipée d'au moins un dispositif amortisseur 61 qui sera décrit plus en détail en référence à la vue en coupe axiale de la figure 4.

Chaque gondole est constituée d'un cadre formé de deux supports latéraux 62 reliés par deux longerons 63 montés parallèlement aux extrémités respectives des supports 62. Ces supports 62 comportent des moyens permettant d'assurer la fixation amovible des tablettes 15 qui sont de préférence montées de manière amovible sur les gondoles et disposées parallèlement entre elles.

Comme le montre plus particulièrement la figure 3, une gondole 14 est suspendue par ses supports latéraux 62 à des maillons 65 des deux chaînes 12 et 13. Les supports 62, et par conséquent la gondole 14, sont pendus à deux pivots horizontaux 66 qui constituent en fait un prolongement de l'axe des maillons 65. Le dispositif amortisseur 61 est monté d'un côté de la gondole 14. Toutefois, un tel dispositif pourrait être adapté des deux côtés pour obtenir un effet d'amortissement plus important du mouvement pendulaire de la gondole.

Ce dispositif amortisseur 61 est représenté plus en détail par la figure 4. Le pivot 66, qui constitue l'axe du maillon 65 de l'une des chaînes 12 ou 13, porte une douille 67 sur laquelle est monté un disque de freinage 68. Cette douille est montée librement sur le pivot 66 et porte avantageusement à sa périphérie un ensemble de crans axiaux. Le disque de freinage est chassé sur ces crans qui assurent son maintien en position. La douille 67 est solidaire d'une plaque 69 qui est couplée rigidement à une pièce 70 liée au maillon 65 au moyen d'une goupille 71. De ce fait, le disque de freinage 68 est mécaniquement lié au maillon 65 de l'une des chaînes. Ce disque est logé à l'intérieur d'une cavité 72, sensiblement cylindrique, ménagée dans un boîtier 73 constitué d'une pièce circulaire 74 fixée au support latéral 62 de la gondole 14, et d'un capot 75 dont un rebord annulaire 76 s'adapte de manière étanche autour de la pièce circulaire 74. Un joint d'étanchéité 77 est placé dans un logement annulaire 78 ménagé dans une zone du capot 75 en contact avec la douille 67. La cavité 72 est remplie d'une substance visqueuse, par exemple une huile à fort coefficient de viscosité, et a la forme d'un cylindre dont la hauteur de la paroi latérale est légèrement supérieure à l'épaisseur du disque 68 de telle manière que les parois du disque de freinage soient parallèles et disposées à proximité immédiate des parois qui la définissent. Le disque de freinage 68 est fixe puisqu'il est lié à la chaîne. Les parois de la cavité 72 sont mobiles puisque le boîtier 73 est lié à la gondole. Entre les parois du disque et les parois intérieures de la cavité il y a une faible couche d'huile ou d'un liquide très visqueux. Lorsque la gondole bascule, les parois du disque de freinage et celles de la cavité ont un mouvement relatif qui est très rapidement amorti par l'action du frottement exercé par le liquide visqueux formant une couche mince entre ces parois.

Ce dispositif amortisseur a plusieurs avantages. En réglant l'écartement entre le disque de freinage et les parois définissant la cavité et en choisissant une huile de viscosité déterminée il est possible d'obtenir un coefficient d' amortissement important du mouvement pendulaires des gondoles. En outre, ce système n'a pas de position résiduelle, c'est-à-dire que les gondoles reprennent toujours une position verticale après un mouvement oscillatoire.

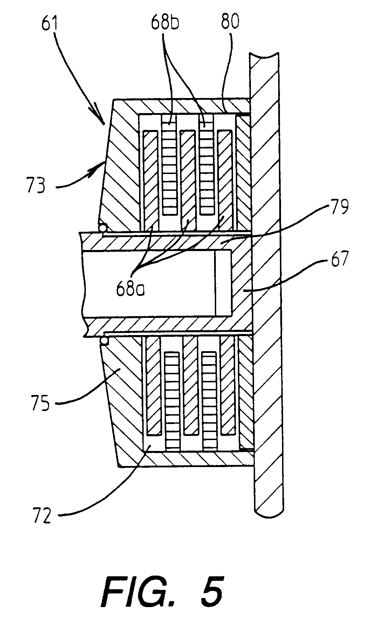

Un perfectionnement de ce système est représenté par la figure 5. Il s'agit d'une variante de construction qui dérive de la réalisation représentée par la figure 4, le disque de freinage 68 étant remplacé par un premier groupe de disques de freinage 68a et par un deuxième groupe de disques de freinage 68b. Dans l'exemple représenté, le premier groupe se compose de trois disques et le deuxième groupe se compose de deux disques. Les disques 68b du deuxième groupe sont intercalés entre les disques 68a du premier disque. Selon un mode préféré de montage de ces disques, le manchon 67 comporte des crans périphériques longitudinaux 79 sur lesquels sont chassés les disques de freinage 68a et la surface cylindrique du capot 75 qui définit la paroi latérale de la cavité 72 de forme cylindrique comporte également des crans 80 longitudinaux sur lesquels sont chassés les disques de freinage 68b. Il est évident que ces disques doivent être montés l'un après l'autre, et de façon alternative, c'est-à-dire d'abord un disque 68a puis un disque 68b et ainsi de suite.

Comme précédemment, la cavité est remplie d'un liquide visqueux et l'écartement entre les disques est choisi pour que la friction entre eux et la pellicule de fluide visqueux soit suffisamment efficace pour amortir rapidement le balancement des gondoles.

Par ailleurs, il est évident que le mode de fixation du boîtier et celui du disque de freinage pourraient être inversés. Le disque de freinage pourrait être rendu solidaire de la gondole et le boîtier pourrait être monté sur le maillon de la chaîne.

Grâce à ce système d' amortissement, l' amplitude des oscillations des gondoles est réduite et rapidement amortie, ce qui permet de prévoir un écartement plus faible entre les colonnes de gondoles et, par conséquent, de réduire l'encombrement de l'installation de stockage.

## Revendications

1. Installation de stockage pendulaire (10) de produits (16), notamment de produits alimentaires et plus particulièrement de plaques de chocolat ou similaires, ces produits étant déposés sur des tablettes (15) disposées horizontalement sur des gondoles (14) pendues horizontalement à deux chaînes (12, 13) cheminant parallèlement entre elles sur un circuit fermé comprenant une section d'alimentation (17) allant d'une station de dépôt (18) des produits sur les tablettes, à une station réceptrice (19) de ces produits agencée pour décharger les tablettes, et une section de retour (20) dans quelle les tablettes sont ramenées vides de la station réceptrice à la station de dépôt, caractérisée en ce que chaque gondole (14) est associée à au moins un dispositif amortisseur (61) agencé pour limiter l'amplitude de son mouvement oscillant et pour amortir rapidement ce mouvement, ce dispositif amortisseur (61) comportant au moins un disque de freinage (68) et des moyens pour coopérer avec au moins une surface de ce disque pour exercer une friction sur cette surface, le disque et lesdits moyens étant respectivement solidaires d'une des chaînes (12, 13) et de la gondole (14) et ayant un mouvement relatif lorsque la gondole est soumise à des oscillations, le disque de freinage (68) étant logé à l'intérieur d'une cavité (72) ménagée à l'intérieur d'un boîtier (73) et contenant un liquide visqueux.

2. Installation selon la revendication 1, caractérisé en ce que ledit liquide visqueux est une huile ayant un coefficient de viscosité élevé.

3. Installation selon la revendication 1, caractérisée en ce que ladite cavité (72) a une forme cylindrique et en ce que la hauteur de sa paroi latérale est légèrement supérieure à l'épaisseur du disque de freinage (68) de telle manière que l'espace séparant les surfaces planes de ce disque des parois intérieures adjacentes de la cavité (72) est faible mais suffisante pour contenir un volume prédéterminé de liquide visqueux.

4. Installation selon la revendication 1, caractérisée en ce que le disque de freinage (68) est solidaire d'une douille (67) montée sur un pivot (66) qui constitue l'axe d'un maillon (65) d'une chaîne (12 ou 13), et en ce que cette douille est rendue solidaire dudit maillon.

5. Installation selon la revendication 4, caractérisée en ce que ladite douille (67) comporte des crans périphériques disposés parallèlement à son axe et en ce que le disque de freinage (68) est chassé sur lesdits crans.

6. Installation selon la revendication 1, caractérisée en ce que ladite cavité (72) est ménagée à l'intérieur d'un boîtier (73) solidaire d'un support latéral (62) d'une gondole (14), ce boîtier étant constitué principalement d'une pièce circulaire (74) et d'un capot (75) fixé contre ladite pièce circulaire.

7. Installation selon la revendication 6, caractérisée en ce que ledit capot (75) comporte un rebord annulaire (76) qui s'adapte de manière étanche autour de ladite pièce circulaire (74).

8. Installation selon la revendication 6, caractérisée en ce que ledit capot comporte un logement annulaire (78) agencé pour contenir un joint d'étanchéité en contact avec ladite douille (67).

9. Installation selon l'une quelconque des revendications précédentes, caractérisée en ce que le dispositif amortisseur (61) comporte plusieurs disques de freinage (68a, 68b) logés à l'intérieur de la cavité (72) contenant un liquide visqueux.

10. Installation selon la revendication 9, caractérisée en ce que les disques de freinage se divisent en un premier groupe de disques de freinage (68a) solidaires de la douille (67) et en un second groupe de disques de freinage (68b) solidaires du boîtier (73), chaque disque du second groupe étant interposé entre deux disques du premier groupe.

11. Installation selon la revendication 10, caractérisée en ce que les disques de freinage (68b) du second groupe sont chassés à l'intérieur du capot (75), sur des crans (80) qui garnissent une surface intérieure définissant la paroi latérale de la cavité (72) de forme cylindrique.

## Claims

1. Pendulant storage device (10) of products (16), in particular for food products and more particularly for bars of chocolate or the like, these products being placed on shelves (15) arranged horizontally on pendulant product carriers (14) horizontally suspended on two chains (12, 13) moving parallel to each other in a closed circuit comprising a feed section (17) going from a station (18) for loading products on the shelves, to a product receiving station (19) arranged for unloading the shelves, and a return section (20) in which the empty shelves are brought back from the receiving station to the loading station, characterised in that each pendulant product carrier (14) is associated with at least one dampening device (61) arranged for limiting the amplitude of its oscillating movement and for rapidly dampening this movement, this dampening device (61) comprising at least one braking disc (68) and means for cooperating with at least one surface of this disc for exercising friction on this surface, the disc and said means being attached to one of the chains (12, 13) and to the pendulant product carrier (14) respectively and having a relative movement when the pendulant product carrier is subjected to oscillations, the braking disc (68) being housed within a cavity (72) which is arranged inside a case (73) and which contains a viscous liquid.

2. Installation according to claim 1, characterised in that said viscous liquid is an oil having a high viscosity coefficient.

3. Installation according to claim 1, characterised in that said cavity (72) has a cylindrical shape and in that the height of its lateral wall is slightly greater than the thickness of the braking disc (68) so that the space separating the flat surfaces of this disc from the adjacent inner walls of the cavity (72) is small, but sufficient to contain a predetermined volume of viscous liquid.

4. Installation according to claim 1, characterised in that the braking disc (68) is attached to a sleeve (67) mounted on a pivot (66) which constitutes the pin of a link (65) of a chain (12 or 13), and in that this sleeve is attached to said link.

5. Installation according to claim 4, characterised in that said sleeve (67) comprises peripheral notches arranged parallel to its axis and in that the braking disc (68) is driven onto said notches.

6. Installation according to claim 1, characterised in that said cavity (72) is arranged inside a case (73) attached to a lateral support (62) of a pendulant product carrier (14), this case principally consisting of a circular part (74) and a cover (75) fixed against said circular part.

7. Installation according to claim 6, characterised in that said cover (75) comprises an annular rim (76) which fits around said circular part (74) in a watertight manner.

8. Installation according to claim 6, characterised in that said cover comprises an annular recess (78) arranged for containing a sealing gasket in contact with said sleeve (67).

9. Installation according to any one of the preceding claims, characterised in that the dampening device (61) comprises several braking discs (68a, 68b) housed within the cavity (72) containing a viscous liquid.

10. Installation according to claim 9, characterised in that the braking discs are divided into a first group of braking discs (68a) attached to the sleeve (67) and a second group of braking discs (68b) attached to the case (73), each disc of the second group being interposed between two discs of the first group.

11. Installation according to claim 10, characterised in that the braking discs (68b) of the second group are driven inside the cover (75), onto notches (80) which line an inner surface defining the lateral wall of the cylindrical cavity (72).

## Patentansprüche

1. Hängespeicher (10) für Gegenstände (16), besonders für Lebensmittel und vor allem für Schokoladetafeln oder was ähnlichem, wobei diese Gegenstände auf Tabletts (15) abgelegt sind, die horizontal an Gondeln (14) angeordnet sind, welche horizontal an zwei zueinander parallelen, sich langsam auf einer geschlossenen Bahn fortbewegenden Ketten (12,13) aufgehängt sind, wobei diese Einrichtung einen Zuführungsabschnitt (17) aufweist, mit einer Station (18) zum Auflegen der Produkte auf die Tabletts, anschließend eine Abnahmestation (19) für diese Produkte, die dazu dient, die Tabletts zu entleeren, und einen Rückführungsabschnitt (20), in welchem die Tabletts leer von der Abnahmestation zur Station zum Auflegen zurückgeführt werden,
**dadurch gekennzeichnet,** daß
jede Gondel (14) mindestens mit einer Dämpfungsvorrichtung (61) verbunden ist, die dazu dient, die Schwingungsweite ihrer Pendelbewegung zu begrenzen und diese Bewegung rasch zu dämpfen, wobei diese Dämpfungsvorrichtung (61) mindestens eine Bremsscheibe (68) aufweist, sowie Mittel zum Zusammenarbeiten mit mindestens einer Fläche dieser Scheibe, um eine Reibung auf diese Fläche auszuüben, wobei die Scheibe und die Mittel jeweils fest mit einer der Ketten (12,13) und der Gondel (14) verbunden sind und eine Relativbewegung haben, wenn die Gondel Schwingungen ausführt, wobei die Bremsscheibe (68) im Inneren eines Hohlraumes (72) liegt, der im Inneren eines Gehäuses (73) vorgesehen ist und eine viskose Flüssigkeit enthält.

2. Einrichtung nach Anspruch 1,
**dadurch gekennzeichnet,** daß
die viskose Flüssigkeit ein Öl mit einem hohen Viskositätskoeffizienten ist.

3. Einrichtung nach Anspruch 1,
**dadurch gekennzeichnet,** daß
der Hohlraum (72) eine zylindrische Form hat und die Höhe seiner Seitenwand etwas größer ist als die Dicke der Bremsscheibe (68), so daß der die ebenen Flächen dieser Scheibe von den gegenüberliegenden, inneren Wänden des Hohlraumes (72) trennende Raum gering ist, aber ausreichend, um ein vorbestimmtes Volumen der viskosen Flüssigkeit aufzunehmen.

4. Einrichtung nach Anspruch 1,
**dadurch gekennzeichnet,** daß
die Bremsscheibe (68) fest mit einer auf einem Zapfen (66) montierten Buchse (67) verbunden ist, wobei der Zapfen die Achse eines Gliedes (65) einer Kette (12 oder 13) bildet, und daß diese Buchse fest mit dem Kettenglied verbunden ist.

5. Einrichtung nach Anspruch 4,
**dadurch gekennzeichnet,** daß
die Buchse (67) periphere Kerben aufweist, die parallel zur ihrer Achse angeordnet sind, und daß die Bremsscheibe (68) auf diese Kerben aufgepreßt ist.

6. Einrichtung nach Anspruch 1,
**dadurch gekennzeichnet,** daß
sich der Hohlraum (72) im Inneren eines fest mit der seitlichen Halterung (62) einer Gondel (14) verbundenen Gehäuses (73) befindet, wobei dieses Gehäuse in erster Linie aus einem runden Teil (74) und einer Abdeckung (75) besteht, die an dem runden Teil befestigt ist.

7. Einrichtung nach Anspruch 6,
**dadurch gekennzeichnet,** daß
die Abdeckung (75) einen ringförmigen Rand (76) aufweist, der sich dicht um das runde Teil (74) anlegt.

8. Einrichtung nach Anspruch 6,
**dadurch gekennzeichnet,** daß
die Abdeckung eine ringförmige Aussparung (78) aufweist, die dazu dient, einen Dichtungsring aufzunehmen, der mit der Buchse (67) in Kontakt ist.

9. Einrichtung nach einem der vorhergehenden Ansprüche,
**dadurch gekennzeichnet,** daß
die Dämpfungsvorrichtung (61) mehrere Bremsscheiben (68a,68b) aufweist, die innerhalb des Hohlraumes (72) angeordnet sind, der eine viskose Flüssigkeit enthält.

10. Einrichtung nach Anspruch 9,
**dadurch gekennzeichnet,** daß
sich die Bremsscheiben in eine erste Gruppe von Bremsscheiben (68a) aufteilen, die fest mit der Buchse (67) verbunden ist, und in eine zweite Gruppe von Bremsscheiben (68b), die mit dem Gehäuse (73) fest verbunden ist, wobei jede Scheibe der zweiten Gruppe zwischen zwei Scheiben der ersten Gruppe zu liegen kommt.

11. Einrichtung nach Anspruch 10,
**dadurch gekennzeichnet,** daß
die Bremsscheiben (68b) der zweiten Gruppe im Innern der Abdeckung (75) auf Kerben (80) gepreßt sind, mit welchen eine Innenfläche versehen ist, welche die seitliche Wand des zylinderförmigen Hohlraumes (72) definiert.
